# EUROPEAN PATENT APPLICATION

(11) **EP 3 054 397 A1**
(43) Date of publication of application: **10.08.2016**
(21) Application number: 15305169.3
(22) Date of filing: 05.02.2015
(51) Int. Cl.: G06F 21/77, G06F 21/79, G06Q 20/34, H04L 29/08, H04W 4/00

(54) **Method of managing applications in a secure element**

(71) Applicant: GEMALTO SA, 92190 Meudon (FR); GEMALTO INC, Austin, TX 78759 (US)
(72) Inventor: Hugot, Didier, Austin, TX 78727 (US); Rozak-Draicchio, Lionel, Austin, TX 78727 (US); Chretien, Stéphane, 06410 Biot (FR)
(74) Representative: Grevin, Emmanuel

(57) **Abstract**

The invention is a method for managing applications in a secure element. Each of the applications is composed of an executable instance and applicative data. These applications share a common executable instance and have their own applicative data managed in as many secure repositories securely handled and sandboxed by the common executable instance.

## Description

### (Field of the invention)

The present invention relates to methods of managing a plurality of applications in a secure element. It relates particularly to methods for securely manage applications in a secure element.

### (Background of the invention)

A secure element is either a tamper-resistant physical component able to store data and to provide services in a secure manner or a software component emulating a component and providing a trusted storage area and trusted services. A secure element has an operating system configured to deny access to its resources to an entity which is not entitled. In general, a secure element has a limited amount of memory, a processor with limited capabilities and is devoid of battery. For instance a UICC (Universal Integrated Circuit Card) is a secure element which embeds SIM applications for telecommunication purposes. A secure element can be installed, fixedly or not, in a terminal, like a mobile phone for example. In some cases, the terminals are constituted by machines that communicate with other machines for M2M (Machine to Machine) applications.

A secure element can be in the format of a smart card, or may be in any other format such as for example but not limited to a packaged chip as described in PCT/SE2008/050380, or any other format.

It is known to solder or weld the secure element in a host device, in order to get it dependent of this host device. This is done in M2M (Machine to Machine) applications. The same objective is reached when a chip (a secure element) containing an application is contained in the host device. The chip is for example soldered to the mother-board of the host device or machine and constitutes an embedded-secure element (eSE).

A removable secure element uniquely associated with its hosting device may also be considered as an embedded-secure element.

According to the known process, a secure element can contain several applications which are stored in as many distinct security domains. The creation of a new security domain is controlled by the owner of the secure element. Thus, when a third party wants to add its new application in a secure element, the third party must ask the owner of the secure element to create a security domain allocated to the third party. Then the third party must ask the owner of the secure element to download the application package into the allocated security domain. Lastly, the third party must ask the owner of the secure element to create an instance of the application from the downloaded package. For all these operations, the third party depends on the authorization provided by the owner of the secure element.

There is a need to allow a third party to add a further application in a secure element, without repetitive actions required from the secure element owner.

### (Summary of the Invention)

An object of the invention is to solve the above mentioned technical problem.

The object of the present invention is a method for managing applications in a secure element. Each of the applications is composed of an executable instance and applicative data. The applications share a common executable instance and have their own applicative data managed in as many secure repositories securely handled and sandboxed by the common executable instance.

Advantageously, on receipt of a command requesting creation of a new application, the executable instance may create a new secure repository and allocate it to the applicative data of the new application.

Advantageously, the secure element may be connected to a host device and the applications may be administrated by a remote server which accesses the executable instance through the host device.

Advantageously, the secure element may be connected to a host device comprising an applicative agent specifically designed for cooperating with the applications sharing the common executable instance and one of said applications and the applicative agent may perform a transaction with a device communicating with the host device.

Another object of the invention is a secure element comprising applications composed of an executable instance and applicative data. Said applications share a common executable instance and their own applicative data are managed in as many secure repositories. The common executable instance is configured to securely handle and sandbox the secure repositories.

Advantageously, the common executable instance may be configured to run only one of said applications at a time. The starting one of said applications may reset granted rights related to the other applications. The access to each of said secure repositories may be protected by as many predefined rights and the common executable instance may be configured to deny access to one of said secure repositories if its predefined right has not been successfully granted.

Another object of the invention is a system comprising a host device and a secure element according to the invention. The secure element is connected to the host device. The host device comprises an applicative agent specifically designed for cooperating with the applications sharing the common executable instance. One of said applications and the applicative agent are configured to perform a transaction with a device able to communicate with the host device.

Advantageously, one of said applications may be configured to handle its own keys, to generate cryptograms and to send said cryptograms to the applicative agent.

Advantageously, the system may comprise a remote server comprising an administration agent configured to administrate said applications by accessing the common executable instance through the host device.

Advantageously, the system may include a second remote server configured to initiate creation of the common executable instance in the secure element.

### (Brief description of the drawings)

Other characteristics and advantages of the present invention will emerge more clearly from a reading of the following description of a number of preferred embodiments of the invention with reference to the corresponding accompanying drawings in which:
- Figure 1 is an example of a secure element comprising several applications according to the prior art,
- Figure 2 is an example of a system comprising a server and a device hosting a secure element according to the invention,
- Figure 3 is an example of a secure element comprising three applications managed according to the invention, and
- Figure 4 is an example of a secure element comprising four applications managed according to the invention.

### (Detailed description of the preferred embodiments)

The invention may apply to any types of secure element intended to store a plurality of applications which are administrated in an autonomous way. The secure element may be coupled to any type of host machine able to establish a communication session with the secure element. For example the host machine may be a mobile phone, a tablet PC, an electronic pair of glasses, an electronic watch, an electronic bracelet, a vehicle, a meter, a slot machine, a TV or a computer.

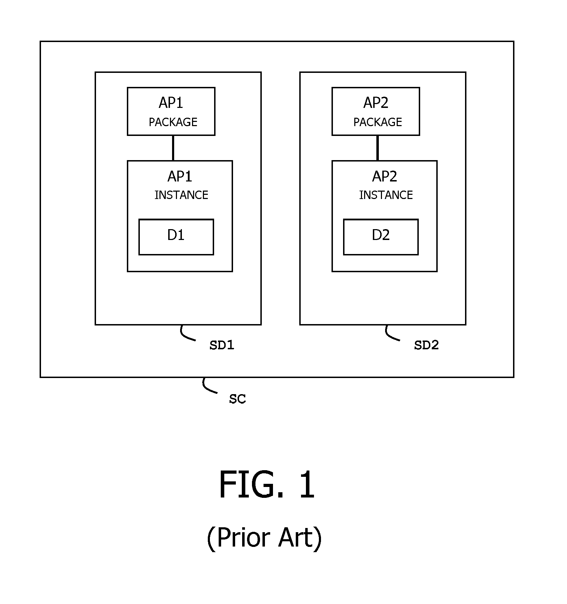

**Figure 1** shows an example of a secure element SC comprising several applications according to the prior art.

The secure element SC comprises two distinct security domains SD1 and SD2 as defined in Global Platform Card Specifications V2.2.

The software application AP1 is installed in the security domain SD1. The package of the application AP1 and the instance of the application AP1 are stored in the security domain SD1. The applicative data D1 of the application AP1 are included in the instance of the application AP1. Similarly, the software application AP2 is installed in the security domain SD2.

The control of access to the application AP1 is managed at the security domain SD1 level while access to the application AP2 is handled by the security domain SD2.

In particular, the control of access to the applicative data D2 is managed by the security mechanism of the security domain SD2. (i.e. not by the instance of the application AP2)

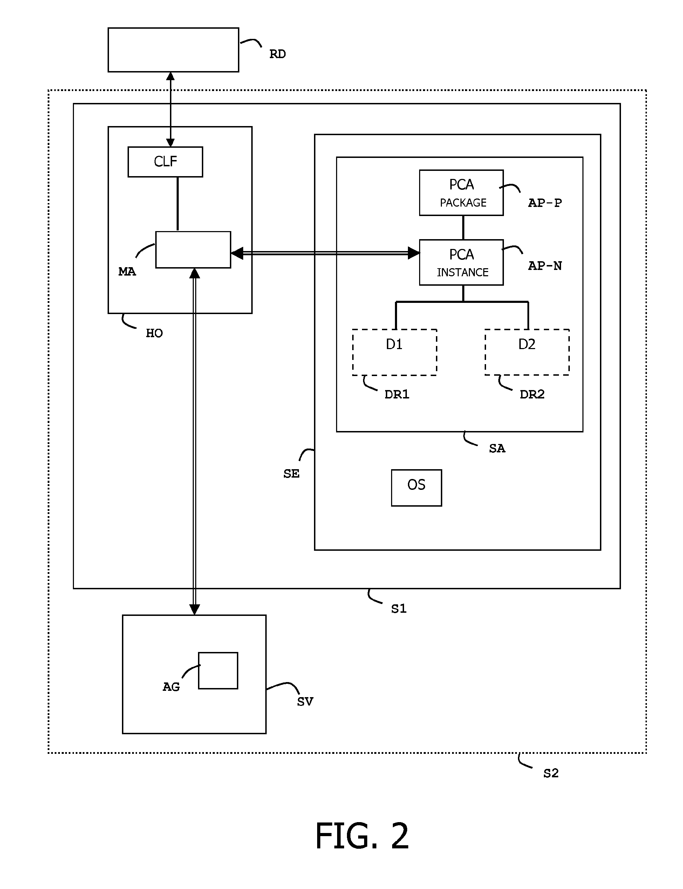

**Figure 2** shows an example of a system S2 comprising a server SV, a host device HO and a secure element SE according to the invention.

The host device HO embeds the secure element SE.

The system S1 consists of the combination of the host device HO and the secure element SE. In this example, the host device HO is a mobile phone having a hardware communication interfaces for communicating with the secure element SE.

The secure element SE is an embedded UICC which comprises a working memory of RAM type, a processing means and a non volatile memory. The secure element SE comprises an operating system OS. The secure element SE also comprises a secure area SA which is implemented as a security domain compliant with Global Platform Card Specifications V2.2 requirements in this example.

Two software applications AP1 and AP2 have been installed in the secure area SA of the secure element SE. These software applications share a common application package AP-P (also named PCA package) and a unique application instance AP-N (also named PCA instance). The application package AP-P has been initially loaded in the secure area SA. Then the application instance AP-N has been created from the application package AP-P. In this example, the application AP1 and AP2 are payment applications depending on a financial institution.

The secure area SA comprises two distinct secure repositories DR1 and DR2 which are allocated respectively to the applications AP1 and AP2. According to this embodiment, the secure repositories DR1 and DR2 cannot be directly accessed by an entity different from the common application instance AP-N. The applicative data D1 of the application AP1 is stored in the repositories DR1 and applicative data D2 of the application AP2 is stored in the secure repositories DR2.

The applicative data may encompass files, counters, keys, parameters and any kind of information managed by an application. The instance AP-N mainly includes executable data (or interpretable data in case of application written in object-oriented language) and may include some static/dynamic parameters common to several applications.

The instance AP-N is configured to securely handle the security repositories DR1 and DR2. The instance AP-N is configured to manage each security repository as a sandbox. The instance AP-N is configured to run only one application at a time. When an application is executed, the instance AP-N only access the secure repository allocated to the running application.

Advantageously, when starting one of its associated applications, the instance AP-N resets granted rights related to the other applications. The access to each of the secure repositories is preferably protected by as many predefined rights and the instance AP-N is configured to deny access to a secure repository if its allocated predefined rights have not been successfully granted.

In one example the security of each repository can rely on Repository Access protection. For instance, the access to a security repository can be authorized only after a successful user authentication. Such a user authentication can be based on PIN checking, Biometry checking or verification of a cryptogram computed using PKI. In addition, a device-level protection can be implemented. For instance, the access to a security repository can be restricted to a specific application installed in the Host device.

In another example, the security of each repository can rely on Repository Data protection. In this case, the data stored in each security repository is ciphered. For instance, the data can be encrypted using symmetric or asymmetric keys. The data can be encrypted using static keys stored locally or not (such as a PIN that the user should enter). The data can be encrypted using static keys such as One-Time-Password.

When it is running, the application AP1 is handled in the form of the combination of the instance AP-N and applicative data D1. In the same way, the application AP2 is run as the combination of the instance AP-N and applicative data D2. When execution of an application is requested, the instance AP-N handles an indicator specific to the select application.

When the application AP1 is running, the instance AP-N forbids any access to the secure repository DR2. The instance AP-N is designed to activate only one secure repository at a time. In addition, the instance AP-N is configured to check if access rights of repository DR1 have been granted before accessing (read/write) the data D1. These access rights may be managed through password/Pin verification or the checking of a received cryptogram computed using a preset algorithm for example.

Preferably, the instance AP-N enciphers (and deciphers) the data D1 using a key set allocated to the application AP1. The key set can be stored in the security repository DR1 or in the instance AP-N.

The host device HO comprises a NFC (Near Field Communication) controller (also called CLF) and an applicative agent MA which is specifically designed for cooperating with the applications which uses the common instance AP-N. In other words, the applicative agent MA is specifically designed for cooperating with the common instance AP-N for running the applications AP1 and AP2.

In one embodiment, the applicative agent MA is configured to cooperate with one of the applications executed using the instance AP-N to perform a transaction with an external device. For instance, the applicative agent MA may exchanges messages with a contactless reader RD (through the CLF) for completing the transaction. In this case, the application AP1 can be executed in the system S1 thanks to the combination of three distinct elements: the applicative agent MA, the instance AP-N and the content of the secure repository DR1.

In one embodiment, a part of the application AP1 may be implemented in the applicative agent MA. The instance AP-N may be configured to handle applicative keys belonging to the application AP1, to generate cryptograms using these keys and to send cryptograms to the applicative agent MA. The applicative keys are stored in the secure repository DR1. In another example, the application AP1 may be configured to provide enciphering/deciphering services based on secret data stored in its repository DR1 and the execution of the instance AP-N. In another example, the application AP1 may be configured to provide Key generation service or to act as a Keys Management System (KMS) based on the combination of the repository DR1 and the execution of the instance AP-N.

In some embodiments, the applicative agent MA may be configured to communicate with an external device through the Telecom Over-The-Air mechanism, through a Wi-Fi session or through a wire channel, like the Internet.

A distant OTA server (not drawn at Figure 2) may be configured to initiate the loading of the package AP-P and creation of the common executable instance AP-N in the secure element SE. According to an embodiment of the invention, the entity in charge of the installation of the instance AP-N can be different from the entity in charge of using the instance AP-N for running the application AP1.

The distant OTA server can create the instance AP-N without any security repository. The distant OTA server can personalize the instance AP-N with a temporary key which is provided to the server SV for creation of a security repository allocated to a new application

In on embodiment, the loading of the package AP-P and the creation of the common instance AP-N in the secure element SE may carried out during the personalization stage of the secure element SE. (i.e. before the issuance of the secure element SE.)

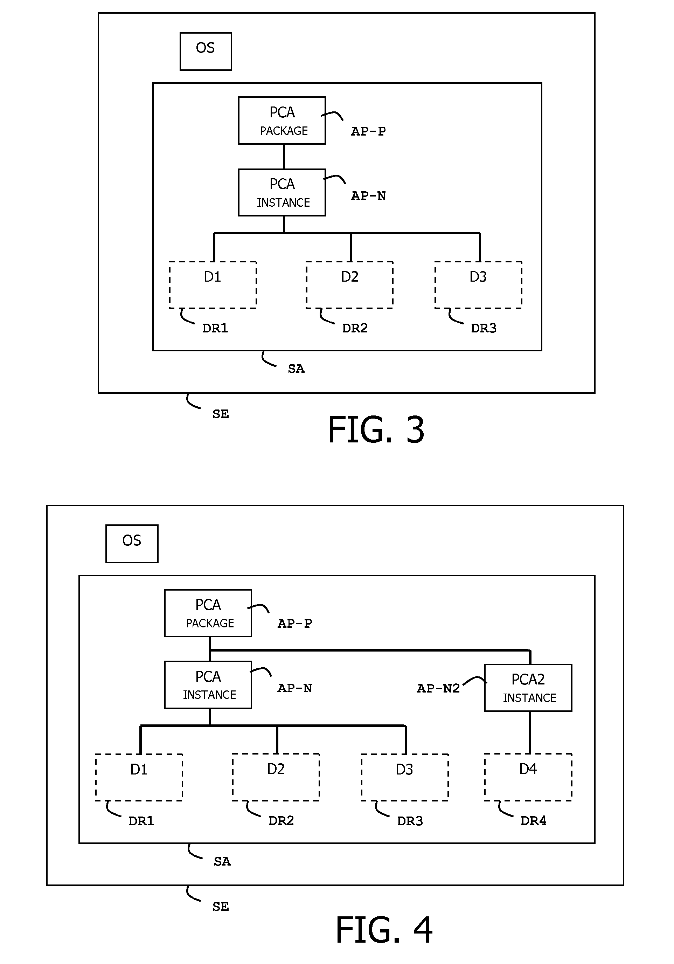

The system S2 comprises the system S1 and a remote server SV. The remote server SV includes an administration agent AG which is configured to administrate the applications using the instance AP-N. Assuming that the instance AP-N is already created in the secure element SE, the agent AG can be designed to request the creation of a new application based on the instance AP-N. For example, the agent AG may request the creation of a third application AP3. In this case, a new secure repository DR3 is created in the secure area SA for storing the applicative data D3 of the application AP3. In this case, the instance AP-N can be updated with administrative data to reference the new secure repository DR3. The instance AP-N can also be updated with key-set required to handle security of the secure repository DR3 Figure 3 shows an example of the secure element SE after the creation of the third application AP3 according to the invention.

Advantageously, both the administration agent AG and the instance AP-N comprise secret data (not drawn) allowing them to establish a secure channel between them. The secret data may be a couple public/secret keys or a shared secret key set for example. The secret data is specifically allocated to the instance AP-N.

Advantageously, the administration agent AG can be configured to send to the applicative agent MA a Push notification asking to connect the server SV. In response, the applicative agent MA can connect the server SV through a HTTP channel. Then the applicative agent MA can send a script to the applicative agent MA. By running the script, the applicative agent MA will request the creation of new application to the instance AP-N. Thus the server SV does not rely on an OTA server for administrating its applications.

Advantageously, the server SV may be able to request the deletion of an application based on the instance AP-N. For instance, the server SV may request the removal of the application AP1. In this case, either the secure repository DR1 is removed or its content is erased.

When all security repositories attached to the instance AP-N have been deleted, the instance AP-N remains present in the secure element SE.

A distant OTA server (not drawn at Figure 2) may be configured to initiate the creation of a second common instance AP-N2 from the application package AP-P in the secure area SA. The second common instance AP-N2 is distinct from the first common executable instance AP-N1. The creation of the instance AP-N2 may be performed when a new application AP4 is going to be installed in the secure element SE. A new secure repository DR4 is created in the secure area SA for storing the applicative data D4 of the application AP4. Figure 4 shows an example of the secure element SE after the creation of the fourth application AP4.

Advantageously, a third server (not drawn) may comprise a second secret data allowing establishing a secure channel with the instance AP-N2. Thus the third server can administrate the application(s) relying on the instance AP-N2 in the secure element SE.

Coming back to the secure element shown at Figure 2, the application AP1 and AP2 (and thus the instance AP-N) can be remotely administrated by a bank which provides two payments applications on a single secure element. In this case, the server SV may be fully managed by the bank. Thanks to the invention, the bank can create and administrate new payment applications without asking anything at the owner of the secure area SA or the owner of the secure element.

Coming back to the secure element shown at Figure 3, the application AP1, AP2 and AP3 (and thus the instance AP-N) can be remotely administrated by a consortium of banks which allocate a payment application for each bank on a single secure element.

Coming back to the secure element shown at Figure 4, the application AP1, AP2 and AP3 (and thus the instance AP-N) can be remotely administrated by a first entity which owns the secrete data allowing to securely communicate with the instance AP-N. A second entity can own the second secret allowing administrating the application AP4 (and thus the instance AP-N2). Thus two distinct entities are able to autonomously manage the application they control on the secure element. One of these entities may be a Trusted Service Manager (TSM).

In one embodiment, the applications AP1 and AP2 comply with JavaCard specifications 2.2.x or 3.x for example and the operating system OS comprises a virtual machine able to run these applications.

It must be understood, within the scope of the invention that the above-described embodiments are provided as non-limitative examples. In particular, the secure element may comprise any number of applications. The applications can be of all types and all domains such as payment, transport access, identity, Telecom, video on demand or loyalty for example. The secure area SA may be implemented thanks to a framework different from Global Platform.

The architecture of the systems shown at Figure 2 is provided as example only.

## Claims

1. A method for managing applications in a secure element (SE), each of said applications being composed of an executable instance and applicative data,
**characterized in that** said applications share a common executable instance (AP-N) and have their own applicative data (D1, D2) managed in as many secure repositories (DR1, DR2) securely handled and sandboxed by the common executable instance (AP-N).

2. A method according to claim 1, wherein on receipt of a command requesting creation of a new application, the executable instance (AP-N) creates a new secure repository (DR3) and allocates it to the applicative data (D3) of the new application.

3. A method according to claim 1, wherein the secure element (SE) is connected to a host device (HO) and wherein said applications are administrated by a remote server (SV) which accesses the executable instance (AP-N) through the host device (HO).

4. A method according to claim 1, wherein the secure element (SE) is connected to a host device (HO) comprising an applicative agent (MA) specifically designed for cooperating with the applications sharing the common executable instance (AP-N) and wherein one of said applications and the applicative agent (MA) perform a transaction with a device (RD) communicating with the host device (HO).

5. A secure element (SE) comprising applications composed of an executable instance and applicative data,
**characterized in that** said applications share a common executable instance (AP-N) **in that** their own applicative data (D1, D2) are managed in as many secure repositories (DR1, DR2) and **in that** the common executable instance (AP-N) is configured to securely handle and sandbox said secure repositories (DR1, DR2).

6. A secure element (SE) according to claim 5, wherein the common executable instance (AP-N) is configured to run only one of said applications at a time, wherein starting one of said applications resets granted rights related to the other applications, wherein access to each of said secure repositories (DR1, DR2) is protected by as many predefined rights and wherein the common executable instance (AP-N) is configured to deny access to one of said secure repositories (DR1, DR2) if its predefined right has not been successfully granted.

7. A system (S1) comprising a host device (HO) and a secure element (SE) according to claim 5 which is connected to the host device (HO), wherein the host device (HO) comprises an applicative agent (MA) specifically designed for cooperating with the applications sharing the common executable instance (AP-N) and wherein one of said applications and the applicative agent (MA) are configured to perform a transaction with a device (RD) able to communicate with the host device (HO).

8. A system (S1) according to claim 7, wherein one of said applications is configured to handle its own keys, to generate cryptograms and to send said cryptograms to the applicative agent (MA).

9. A system (S2) according to claim 7, wherein the system (S2) comprises a remote server (SV), wherein remote server (SV) comprises an administration agent (AG) configured to administrate said applications by accessing the common executable instance (AP-N) through the host device (HO).

10. A system (S2) according to claim 9, wherein the system (S2) includes a second remote server configured to initiate creation of the common executable instance (AP-N) in the secure element (SE).
